(19) **Europäisches Patentamt**
**European Patent Office**
**Office européen des brevets**

(11) **EP 4 237 897 B1**

(12) **EUROPEAN PATENT SPECIFICATION**

(45) Date of publication and mention
of the grant of the patent:
**27.08.2025 Bulletin 2025/35**

(21) Application number: **20807359.3**

(22) Date of filing: **13.11.2020**

(51) International Patent Classification (IPC):
**G02B 26/08** *(2006.01)* **G02B 26/10** *(2006.01)*

(52) Cooperative Patent Classification (CPC):
**G02B 26/0858; G02B 26/101**

(86) International application number:
**PCT/EP2020/082093**

(87) International publication number:
**WO 2022/100848 (19.05.2022 Gazette 2022/20)**

(54) **DEFLECTION DEVICE FOR LISSAJOUS SCANNING**

ABLENKVORRICHTUNG FÜR LISSAJOUS-SCANNING

DISPOSITIF DE DÉVIATION POUR BALAYAGE LISSAJOUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.09.2023 Bulletin 2023/36**

(73) Proprietors:
• **Huawei Technologies Co., Ltd.
Shenzhen, Guangdong 518129 (CN)**
• **Fraunhofer-Gesellschaft zur Förderung
der angewandten Forschung e.V.
80686 München (DE)**

(72) Inventors:
• **HOFMANN, Ulrich**
**25524 Itzehoe (DE)**
• **SCHWARZ, Fabian**
**25524 Itzehoe (DE)**
• **PETRAK, Oleg**
**25524 Itzehoe (DE)**
• **JOY, Aloshious, Thottappattu**
**25524 Itzehoe (DE)**
• **GU-STOPPEL, Shanshan**
**25524 Itzehoe (DE)**

• **SENGER, Frank**
**25524 Itzehoe (DE)**
• **SÖRENSEN, Frerk**
**25524 Itzehoe (DE)**
• **CAO, Yong**
**80992 Munich (DE)**

(74) Representative: **Thun, Clemens
Mitscherlich PartmbB
Patent- und Rechtsanwälte
Karlstraße 7
80333 München (DE)**

(56) References cited:
**EP-A1- 3 640 704         WO-A1-93/08539
DE-A1- 102007 058 239   JP-A- 2002 221 673
US-A1- 2006 056 076      US-A1- 2012 320 379**

• **M. SCHOLLES ET AL: "Ultra compact laser
projection systems based on two-dimensional
resonant micro scanning mirrors",
PROCEEDINGS OF SPIE, vol. 6466, 20 January
2007 (2007-01-20), US, pages 64660A,
XP055445368, ISBN: 978-1-5106-1533-5, DOI:
10.1117/12.700093**

## Description

## TECHNICAL FIELD

The present application relates to the field of optical communication, and more particularly to a deflection device for a Micro-Electrical-Mechanical-System (MEMS) scanner with Lissajous scanning.

## BACKGROUND

In the optical regime, MEMS (Micro-Electrical-Mechanical-System) technology has been an enabling tool for numerous cutting-edge devices for optical communication. A MEMS scanner, which is capable of two-dimensional optical scanning, plays a vital role in various low-power and compact scanning applications, including projection, sensing, and imaging. Lissajous scanning is of great interest for compact laser projectors, as micromirrors used in such scanning oscillate resonantly in two axes to achieve much larger amplitudes than non-resonantly operated scanners. With respect to scanned laser projection system, larger amplitudes are equivalent to a higher optical resolution. Thus, laser projection based upon resonant operation of the MEMS scanner is widely adopted, because a favorable amplification of the micromirror oscillation amplitude can be exploited with low power consumption simultaneously. Unlike a raster scanning MEMS scanner, a Lissajous MEMS scanner operates at high scanning frequencies in both axes and offers simple fabrication, high mechanical stability, and uniform scanning quality.

The MEMS scanner frequently includes a micromirror, suspended by springs so as to be movable in one or more axes. When using the MEMS scanner for commercial purpose, one of the critical aspects to consider is the compactness. To achieve compactness, 2D MEMS micromirrors were proposed without a gimbal mount. It was proposed to implement 2D MEMS micromirrors by directly suspending the micromirror using the springs to a surrounding chip frame. However, the above architecture may still lead to inefficient use of the available chip space by suspensions. It is desirable that a deflection device for a scanner should contain smallest possible components while maintaining all requirements needed to achieve a good scanning resolution.

Further, WO 93/08539 A1 refers to a compact beam scanning information readout device and method for reading bar code or other information requires little or no orientation of the information to be scanned by virtue of its raster or omni directional scan capabilities. Only a single mirror is needed to generate two dimensional scans. Scanning in two dimensions may be done with independent and continuous control of the scan in each dimension. The scan patterns may be electronically controlled to instantly achieve various orientations ranging from a straight line rotated about a point to continuously rotating complex patterns. A light collector, light detector, processor, and means of signal transmission are also included. Further, JP 2002221673 A refers to an optical element composed of a first substrate, which is joined on the upper face of a second substrate. In the first substrate, four beam members, which have a crank-shaped beam part are connected with a thin plate member, which is formed integrally with a mirror and a beam member, which is located to enclose the thin plate member, and a first layer electrode is formed of the thin plate member and the beam member. In the second substrate, on the other hand, a second layer electrode divided by four fixed electrode members is placed opposite to the first layer electrode. Further, the thin plate member is inclined or displaced in the vertical direction on an optical axis with an electrostatic force by controlling a voltage applied to the first and the second layer electrodes.

Further, US 2012320379 A1 refers to a deflection device for a scanner with Lissajous scanning including a micromirror that oscillates in at least two deflection axes and that includes a frame and a mirror plate that is movably arranged via a suspension mount. The deflection device also includes a control device for generating control signals for a resonant operation of the micromirror in the at least two deflection axes. The suspension mount includes at least one spring connected at one end to the mirror plate and at the other end to the frame. The frequencies of the control signals for the resonant operation of the micromirror are substantially equal in the at least two deflection axes, but differ at least in terms of the predefined scanning repetition rate. The levels of the resonance frequencies of the deflection axes and control signals are determined by a predefined scanning resolution and a predefined scanning repetition rate.

Further, EP 3640704 A1 refers to an optical scanning device including a mirror part having a mirror surface configured to reflect light, N support cantilevers supporting the mirror part swingably, N drive cantilevers, and a plurality of driving piezoelectric elements secured on N drive cantilevers. The mirror part precesses by setting the frequency of AC voltage applied to each of a plurality of piezoelectric elements to a determined common value and setting the phase of AC voltage applied to each of a plurality of piezoelectric elements to a value determined according to the position of each piezoelectric element.

The inventors have recognized that there is a need to address the aforementioned technical drawbacks in existing technologies in providing a deflection device for Lissajous scanning.

## SUMMARY

It is an object of the present disclosure to provide a deflection device for Lissajous scanning with an optimized compact design for achieving a high scanning resolution. The compact design of the deflection device enables large tilt angles by means of long suspensions with less space utilization, thereby reducing the chip size.

This object is achieved by features of the independent claims. Further, the implementations forms are apparent from the dependent claims, the description, and the figures.

According to a first aspect, a deflection device for Lissajous scanning is provided. The deflection device includes a frame and a mirror. The mirror is movably arranged in a recess in the frame by means of a suspension mount including one or more springs. Each spring is connected at one end to the mirror and at the other end to the frame. Each spring has a shape of a path segment along a circumference of the mirror in such a way that path segment of all springs together covers more than 360 degrees. The arrangement of the one or more springs along the circumference of the mirror reduces the space needed for suspension of the mirror, and thus reduces the chip size.

The one or more springs may enable the mirror to swing back and forth about each of two or three axes with a respective eigenfrequency. The eigenfrequencies associated with the two or three axes may be equal or substantially equal. The mirror reflects a light beam at different angles to form a two-dimensional Lissajous pattern for providing high-quality images with high scan speed.

In a first possible implementation form of the deflection device, the deflection device includes a driving device that is configured to excite swing motion of the mirror about each of the two or three axes at or near the respective eigenfrequency. The driving device is configured to control a resonant operation of the mirror in the two or three axes.

The driving device may include one or more piezoelectric actuators. Each spring may be attached to one of the piezoelectric actuators. The one or more piezoelectric actuators are configured to displace the one or more springs with a high force when actuated with a low drive voltage.

The driving device may be configured to excite the swing motion by applying periodic driving signals to the one or more piezoelectric actuators. The periodic driving signals may include a driving signal for each of the two or three axes of the swing motion of the mirror. The driving signal may include a frequency that is equal or close to the eigenfrequency associated with the respective axis. The driving signal may convey energy to achieve the swing motion of the mirror about each of the two or three axes. The equal or substantially equal frequencies of the drive signal provide a high scanning curve fill factor that can support a high scanning display resolution.

In a second possible implementation form of the deflection device, the suspension mount includes two or more interlaced nested spiral springs. The two or more interlaced nested spiral springs may be a subset of the one or more springs. The two or more interlaced nested spiral springs reduce the space needed for suspension of the mirror.

The two or more interlaced nested spiral springs may be attached to the mirror at an equal angular distance. The two or more interlaced nested spiral springs attached to the mirror at the equal angular distance provide an improved fill factor of scanning trajectory and eliminates the need for a gimbal structure which is used in a gimbal-mounted mirror.

In a second possible implementation form of the deflection device, the suspension mount includes three interlaced nested spiral springs, attached to the mirror 120 degrees apart. Each interlaced nested spiral spring covers a circular segment of more than 120 degrees. Each of the three interlaced nested spiral springs has an increased length and a low-cross section area for providing a long suspension for the mirror. The long suspension helps to realize larger tilt angles without reaching a fracture limit of the three interlaced nested spiral springs.

In a third possible implementation form of the deflection device, the suspension mount includes four interlaced nested spiral springs, attached to the mirror 90 degrees apart. Each interlaced nested spiral spring covers a circular segment of more than 90 degrees. The increased number of interlaced nested spiral springs helps to compensate for the overall lower stiffness of each spiral spring, thus enabling a high scan frequency.

In a fourth possible implementation form of the deflection device, the two or more interlaced nested spiral springs are interlaced in an Archimedean spiral form around the mirror. The Archimedean spiral form provides a compact suspension mount for the mirror, thereby reducing the chip size.

A spring stiffness of at least one interlaced nested spiral spring may be different from a spring stiffness of the remaining interlaced nested spiral springs. The difference in the spring stiffness provides minimal differentiation between the resonance frequencies of the mirror.

At least one of a width, length, thickness and/or a material property of the at least one interlaced nested spiral spring may be different from that of the remaining interlaced nested spiral springs. Lowering the cross-sectional area and increasing the length of the interlaced nested spiral springs helps to realize larger tilt angles without reaching the fracture limit of the springs. In order to compensate for the overall lower stiffness of each spiral spring, a number of interlaced nested spiral springs may be increased up to the desired overall spring stiffness.

In a fifth possible implementation form of the deflection device, the two or more interlaced nested spiral springs are arranged in rotational or mirror symmetry in relation to the mirror. An arbitrary number of N springs are realized by rotating a next respective nested spiral spring by an angle of $2\pi N$, where N is the number of springs. The two or more interlaced nested spiral springs may include a first spiral spring interlaced with the neighboring second or third or fourth or n-th spiral spring. The two or more interlaced nested spiral springs provide a densely packaged spiral spring arrangement, thereby enabling efficient use of the available chip space by the suspensions to achieve optimized compactness.

At least one interlaced nested spiral spring may be a torsion spring. The torsion spring provides an even tension, thus enabling repeatable vibration. The torsion spring has a shape of a path segment along a circumference of the mirror to minimize space requirements.

In a sixth possible implementation form of the deflection device, the mirror is configured such that the moment of inertia of the mirror is different in at least two axes for adjusting any difference between the frequencies of the driving signal associated with the respective axis.

A geometry of the mirror may be different with respect to the at least two axes. The geometry of the mirror may be selected so as to achieve tight packing of mirrors for reducing the chip size.

The mirror may be elliptical. The moment of inertia of the mirror may be modified by means of the elliptical mirror including one or more springs that are identically configured.

In a seventh possible implementation form of the deflection device, the driving device is configured to limit an amplitude of the swing motion of the mirror. The amplitude of the swing motion may be maintained within a resonance range of the mirror.

The driving device may include a control loop that is configured to control the frequencies of the periodic driving signals based upon a measured phase position of the mirror such that a maximum amplitude of the swing motion remains within the resonance range of the mirror. A level of the frequencies may be determined by a predefined scanning resolution and a predefined scanning repetition rate, and the periodic driving signals may have equal or different scanning repetition rates. The frequencies of the periodic driving signals continuously vary with respect to changes in resonance frequencies of the mirror. The frequencies of the periodic driving signals adapt perpetually to instantaneously occurring resonance frequencies of the mirror to result in a Lissajous trajectory to achieve a good image overlap.

In an eighth possible implementation form of the deflection device, the driving device further includes a drive electrode attached to each spring and/or to the mirror. The drive electrode is configured to displace the one or more springs with a high force when actuated with a low drive voltage.

The driving device may include one or more piezoelectric actuators connected to [e.g. arranged on] the one or more interlaced nested spiral springs. The one or more piezoelectric actuators may be arranged on the two or more interlaced nested spiral springs to obtain a compact configuration.

The mirror may be vacuum packaged. The vacuum-packed mirror provides low damping to achieve higher resonance amplitudes of the mirror. The vacuum-packed mirror provides greater achievable scanning angles, lower power consumption by several orders of magnitude, higher usable scanning frequencies, and lower drive voltages with electrostatic or piezoelectric actuators.

A technical problem in the prior art is resolved, where the technical problem is an inefficient use of a chip space for suspension of the mirror. Another technical problem in the prior art is resolved, where the technical problem is the lack of long suspensions with increased stiffness.

Therefore, compared with the prior art, the deflecting device for the Lissajous scanning provided in the present disclosure, has an optimized compact design for achieving a high scanning resolution. The compact design of the deflection device enables large tilt angles by means of long suspensions with less space utilization, thereby reducing the chip size.

These and other aspects of the present disclosure will be apparent from and the implementation(s) described below.

## BRIEF DESCRIPTION OF DRAWINGS

To illustrate the technical solutions in the implementations of the present disclosure or the prior art more clearly, the following briefly introduces the accompanying drawings required for describing the implementations of the prior art. Apparently, the accompanying drawings in the following description show merely some implementations of the present disclosure, and a person of ordinary skill in the art may still derive other drawings from these accompanying drawings without creative efforts.

FIG. 1 is a schematic diagram of a deflection device for Lissajous scanning in accordance with an implementation of the present disclosure;

FIG. 2 is a schematic diagram of a mirror of the deflection device of FIG. 1 that includes four springs attached to the mirror covering a circular segment of more than 90 degrees each in accordance with an implementation of the present disclosure;

FIG. 3 is a schematic diagram of the mirror of the deflection device of FIG. 1 that includes three springs attached to the mirror covering a circular segment of more than 120 degrees each in accordance with an implementation of the present disclosure; and

FIG. 4 is a schematic diagram of the mirror of the deflection device of FIG. 1 that includes four springs attached to the mirror covering a circular segment of more than 120 degrees each in accordance with an implementation of the present disclosure.

**DETAILED DESCRIPTION**

Implementations of the present disclosure provide a deflection device for Lissajous scanning with an optimized compact design to enable large tilt angles by means of long suspensions while still enabling reduced space requirement and reduced chip size for achieving a high scanning resolution.

To make the solutions of the present disclosure more comprehensible for a person skilled in the art, the following clearly and completely describes the technical solutions in the implementations of the present disclosure with reference to the accompanying drawings in the implementations of the present disclosure. Apparently, the described implementations are merely a part rather than all of the implementations of the present disclosure. All other implementations obtained by a person of ordinary skill in the art based on the implementations of the present disclosure without creative efforts shall fall within the protection scope of the present disclosure.

In order to help understand implementations of the present disclosure, several terms that will be introduced in the description of the implementations of the present disclosure are defined herein first.

Terms such as "a first", "a second", "a third", and "a fourth" (if any) in the summary, claims, and foregoing accompanying drawings of the present disclosure are used to distinguish between similar objects and are not necessarily used to describe a specific sequence or order. It should be understood that the terms so used are interchangeable under appropriate circumstances, so that the implementations of the present disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units, but may include other steps or units that are not expressly listed or that are inherent to such process, method, product, or device.

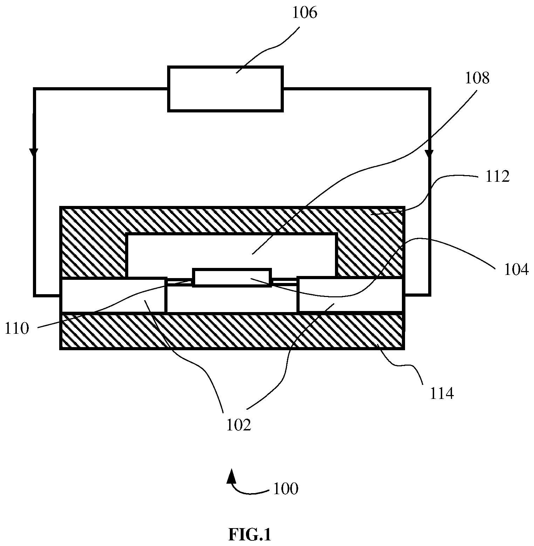

FIG. 1 is a schematic diagram of a deflection device **100** for Lissajous scanning in accordance with an implementation of the present disclosure. The deflection device **100** illustrated includes a frame **102,** and a mirror **104.** The mirror **104** is movably arranged in a recess in the frame **102** by means of a suspension mount including one or more springs **110.** The frame **102** may be stationary and sealed by a first transparent surface **112** and a second transparent surface **114** respectively such that a vacuum-packed sealed chamber **108** is formed. The vacuum-packed sealed chamber **108** provides low damping to achieve higher resonance amplitudes of the mirror **104.** Each of the one or more springs **110** is being connected at one end to the mirror **104** and at the other end to the frame **102.** Each of the one or more springs **110** has a shape of a path segment along the circumference of the mirror **104** in such a way that the path segments of the one or more springs **110** together cover more than 360 degrees. The deflection device **100** may deflect a light beam from an incident axis.

The mirror **104** may be configured to swing back and forth about each of two or three axes with a respective eigenfrequency for reflecting incoming light at different angles. The eigenfrequency associated with the two or three axes is equal or substantially equal.

When the mirror **104** is irradiated with a light beam, the mirror **104** may reflect the light beam at different angles in two dimensions by the back and forth swing motion about each of two or three axes with the respective eigenfrequency to form a two-dimensional Lissajous pattern. The two-dimensional Lissajous pattern provides high-quality images with less power consumption and high scan speed compared to raster patterns.

The deflection device **100** includes a driving device **106** that is configured to excite swing motion of the mirror **104** about each of the two or three axes at or near the respective eigenfrequency. The driving device **106** may include one or more piezoelectric actuators. Each of the one or more springs **110** is attached to one of the one or more piezoelectric actuators. The driving device **106** may be configured to excite the swing motion by applying periodic driving signals to the one or more piezoelectric actuators attached to the one or more springs **110.** In an example implementation, the one or more piezoelectric actuators act on the one or more springs **110** to excite the swing motion of the mirror **104** about each of the two or three axes at or near the respective eigenfrequency. The one or more piezoelectric actuators utilize low drive voltage thereby reducing power consumption by several orders of magnitude.

The periodic driving signals include for each of the two or three axes a driving signal. The driving signal may include a frequency equal or close to the eigenfrequency associated with a respective axis. The driving signal having a frequency equal or close to the eigenfrequency associated with a respective axis may differ at least in terms of a predefined scanning resolution and a predefined scanning repetition rate.

According to a first implementation of the deflection device **100,** the driving device **106** further includes a drive electrode attached to each of the one or more springs **110** and/or to the mirror **104.** The drive electrode may be an electrostatic drive unit, which is attached to the frame **102** at one end and to the each of the one or more springs **110** at the other end. The one or more springs **110** may be tightly arranged in a spiral shape around the mirror **104.** The tight arrangement of the one or more springs **110** in a spiral shape around the mirror **104** reduces a chip space requirement for the suspension of the mirror **104** to a greater extent, thereby enabling an economical component by reducing the chip size. The suspension mount may include two or more interlaced nested spiral springs. The two or more interlaced nested spiral springs may be a subset of the one or more springs **110.** The two or more interlaced nested spiral springs may reduce the space needed for suspension. The two or more interlaced nested spiral springs may be attached to the mirror **104** at an equal angular distance.

According to a second implementation of the deflection device **100,** the two or more interlaced nested spiral springs are arranged in rotational or mirror symmetry in relation to the mirror **104.** An arbitrary number of N springs are realized by rotating a next respective nested spiral spring by an angle of $2\pi N,$ where N is the number of springs. The two or more interlaced nested spiral springs may be interlaced in an Archimedean spiral form around the mirror **104** to provide a compact suspension mount for the mirror **104.** The Archimedean spiral form is a spiral form in which a radius increases linearly moving outward along the length of a spiral.

In an example implementation of the deflection device **100,** four spiral springs of higher stiffness and wider cross-sectional area are arranged by rotating a next spring by 90 degrees relative to a preceding spiral spring. The four springs determine two orthogonal tilting eigenmodes of the mirror **104.** In order to further increase the stiffness and scan speed of the mirror **104** at constant tilting axes, a fixed number of N additional springs of lower cross-sectional area may be implemented between the first four springs, respectively. The at least one of the width, the length, the thickness and/or the material property of the at least one of the interlaced nested spiral springs may be identical. The one or more piezoelectric actuators may be arranged on the two or more interlaced nested spiral springs with minimal inter-electrode distances so that to engage with each electrode efficiently.

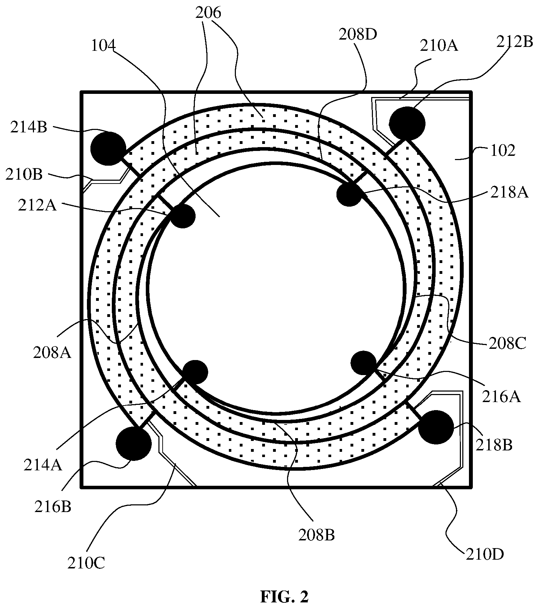

FIG. 2 is a schematic diagram of the mirror **104** of the deflection device **100** of FIG. 1 that includes four springs attached to the mirror **104** covering a circular segment of more than 90 degrees each in accordance with an implementation of the present disclosure. The mirror **104** includes a suspension mount **206** that includes a first spring **208A,** a second spring **208B,** a third spring **208C,** and a fourth spring **208D.** The first spring **208A** includes a first end **212A** and a second end **212B.** The first spring **208A** is attached to the mirror **104** with the first end **212A** and to the frame **102** with the second end **212B.** The second spring **208B** includes a first end **214A** and a second end **214B.** The second spring **208B** is attached to the mirror **104** with the first end **214A** and to the frame **102** with the second end **214B.** The third spring **208C** includes a first end **216A** and a second end **216B.** The third spring **208C** is attached to the mirror **104** with the first end **216A** and to the frame **102** with the second end **216B.** The fourth spring **208D** includes a first end **218A** and a second end **218B.** The fourth spring **208D** is attached to the mirror **104** with the first end **218A** and to the frame **102** with the second end **218B.** The first spring **208A,** the second spring **208B,** the third spring **208C** and the fourth spring **208D** may be attached to the mirror **104** at an equal angular distance of 90 degrees and each covers the circular segment of more than 90 degrees.

The first spring **208A,** the second spring **208B,** the third spring **208C** and the fourth spring **208D** may be interlaced in a form of a spiral around the mirror 104 resulting in an interlaced nested spiral spring structure around the mirror **104.** The first spring **208A,** the second spring **208B,** the third spring **208C** and the fourth spring **208D** may be interlaced in the form of an Archimedean spiral around the mirror **104** to provide a compact suspension mount for the mirror **104.** A stiffness of at least one of the first spring **208A,** the second spring **208B,** the third spring **208C** or the fourth spring **208D** may be different from the stiffness of remaining springs. The difference in the stiffness of the first spring **208A,** the second spring **208B,** the third spring **208C** and/or the fourth spring **208D** provides minimal differentiation between resonance frequencies of the mirror **104.**

A width, length, thickness and/or a material property of at least one of the first spring **208A,** the second spring **208B,** the third spring **208C** or the fourth spring **208D** may be different from that of the remaining springs. Optionally, the length ($l$) of the first spring **208A,** the second spring **208B,** the third spring **208C** and/or the fourth spring **208D** is increased and a cross-sectional area of the first spring **208A,** the second spring **208B,** the third spring **208C** and/or the fourth spring **208D** is decreased. Lowering the cross-sectional area and increasing the length of the at least one of the first spring **208A,** the second spring **208B,** the third spring **208C** or the fourth spring **208D** helps to realize larger tilt angles without reaching a fracture limit of the first spring **208A,** the second spring **208B,** the third spring **208C** or the fourth spring **208D.**

In order to compensate for the overall lower stiffness of each of the first spring **208A,** the second spring **208B,** the third spring **208C** and the fourth spring **208D,** a number of springs may be increased up to a desired overall spring stiffness. The first spring **208A,** the second spring **208B,** the third spring **208C** and the fourth spring **208D** may be arranged in rotational or mirror symmetry in relation to the mirror **104.** An arbitrary number of N springs may be realized by rotating a next respective nested spiral spring by an angle of $2\pi N,$ where N is the number of springs. The first spring **208A,** the second spring **208B,** the third spring **208C** or the fourth spring **208D** may be a torsion spring.

When the mirror **104** is irradiated with a light beam, the mirror **104** may be configured to swing back and forth about each of two or three axes with a respective eigenfrequency for reflecting incoming light at different angles to form a two-dimensional Lissajous pattern. The two-dimensional Lissajous pattern provides high-quality images with less power consumption and high scan speed compared to raster patterns. The eigenfrequency associated with the two or three axes may be equal or substantially equal. The driving device **106** may be configured to excite the swing motion of the mirror **104**

about each of the two or three axes at or near the respective eigenfrequency by applying periodic driving signals to a first piezoelectric actuator **210A,** a second piezoelectric actuator **210B,** a third piezoelectric actuator **210C** and a fourth piezoelectric actuator **210D** attached to the first spring **208A,** the second spring **208B,** the third spring **208C** and the fourth spring **208D** respectively. The periodic driving signals may include for each of the two or three axes a driving signal having a frequency equal or close to the eigenfrequency associated with the respective axis.

The driving device 106 may be configured to limit an amplitude of the swing motion of the mirror **104**. The amplitude of the swing motion may be maintained within a resonance range of the mirror **104**. The mirror **104** may be configured such that the moment of inertia of the mirror **104** is different in at least two axes for adjusting any difference between the frequencies of the driving signal associated with the respective axis. A geometry of the mirror **104** may be different with respect to the at least two axes. The geometry of the mirror **104** may be determined by an optical beam size as well as the type of application, such as, projection or imaging. The mirror **104** may be elliptical with respect to the at least two axes. The moment of inertia may be modified by means of the elliptical mirror including the compact suspension mount with the first spring **208A,** the second spring **208B,** the third spring **208C** and the fourth spring **208D** that may be identically configured.

The first piezoelectric actuator **210A,** the second piezoelectric actuator **210B,** the third piezoelectric actuator **210C** and the fourth piezoelectric actuator **210D** may be arranged correspondingly on the first spring **208A,** the second spring **208B,** the third spring **208C** and the fourth spring **208D** arranged in the interlaced nested spiral spring structure to obtain a compact configuration.

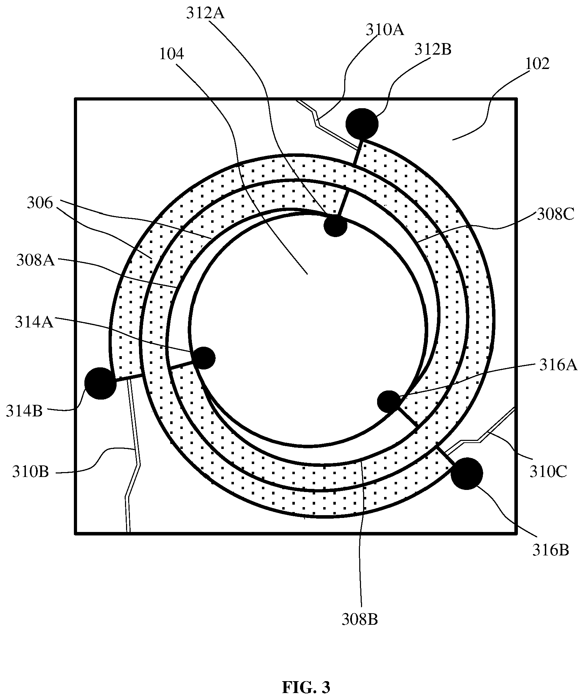

FIG. 3 is a schematic diagram of the mirror **104** of the deflection device **100** of FIG. 1 that includes three springs attached to the mirror **104** covering a circular segment of more than 120 degrees each in accordance with an implementation of the present disclosure. The mirror **104** includes a suspension mount **306** that includes a first spring **308A,** a second spring **308B,** and a third spring **308C**. The first spring **308A** includes a first end **312A** and a second end **312B**. The first spring **308A** is attached to the mirror 104 with the first end **312A** and to the frame **102** with the second end **312B**. The second spring **308B** includes a first end **314A** and a second end **314B**. The second spring **308B** is attached to the mirror **104** with the first end **314A** and to the frame **102** with the second end **314B**. The third spring **308C** includes a first end **316A** and a second end **316B**. The third spring **308C** is attached to the mirror **104** with the first end **316A** and to the frame **102** with the second end **316B**. The first spring **308A,** the second spring **308B,** and the third spring **308C** may be attached to the mirror **104** at an equal angular distance of 120 degrees and each covers the circular segment of more than 120 degrees.

The first spring **308A,** the second spring **308B,** and the third spring **308C** may be interlaced in a form of a spiral around the mirror **104** resulting in an interlaced nested spiral spring structure around the mirror **104**. The first spring **308A,** the second spring **308B** and the third spring **308C** may be interlaced in the form of an Archimedean spiral around the mirror **104** to provide a compact suspension mount for the mirror **104**. A stiffness of the first spring **308A,** the second spring **308B** and/or the third spring **308C** may be different from the stiffness of remaining springs. The difference in the stiffness of the first spring **308A,** the second spring **308B** and/or the third spring **308C** provides minimal differentiation between resonance frequencies of the mirror **104**.

A width, length, thickness and/or a material property of at least one of the first spring **308A,** the second spring **308B** or the third spring **308C** may be different from that of the remaining springs. Optionally, the length (*l*) of the first spring **308A,** the second spring **308B** and/or the third spring **308C** is increased and a cross-sectional area of the first spring **308A,** the second spring **308B** and/or the third spring **308C** is decreased. Lowering the cross-sectional area and increasing the length of the at least one of the first spring **308A,** the second spring **308B** or the third spring **308C** helps to realize larger tilt angles without reaching a fracture limit of the first spring **308A,** the second spring **308B** or the third spring **308C**.

In order to compensate for the overall lower stiffness of each of the first spring **308A,** the second spring **308B,** and the third spring **308C,** a number of springs may be increased up to a desired overall spring stiffness. The first spring **308A,** the second spring **308B** and the third spring **308C** may be arranged in rotational or mirror symmetry in relation to the mirror **104**. The first spring **308A,** the second spring **308B** or the third spring **308C** may be a torsion spring.

When the mirror **104** is irradiated with a light beam, the mirror **104** may be configured to swing back and forth about each of two or three axes with a respective eigenfrequency for reflecting incoming light at different angles to form a two-dimensional Lissajous pattern. The two-dimensional Lissajous pattern provides high-quality images with less power consumption and high scan speed compared to raster patterns. The eigenfrequency associated with the two or three axes may be equal or substantially equal. The driving device **106** may be configured to excite the swing motion of the mirror **104** about each of the two or three axes at or near the respective eigenfrequency by applying periodic driving signals to a first piezoelectric actuator **310A,** a second piezoelectric actuator **310B,** and a third piezoelectric actuator **310C** attached to the first spring **308A,** the second spring **308B,** and the third spring **308C** respectively. The periodic driving signals may include for each of the two or three axes a driving signal having a frequency equal or close to the eigenfrequency associated with a respective axis.

The driving device **106** may be configured to limit an amplitude of the swing motion of the mirror **104.** The amplitude of the swing motion may be maintained within a resonance range of the mirror **104.** The mirror **104** may be configured such that the moment of inertia of the mirror **104** is different in at least two axes for adjusting any difference between the frequencies of the driving signal associated with the respective axis. A geometry of the mirror **104** may be different with respect to the at least two axes. The mirror **104** may be elliptical with respect to the at least two axes. The moment of inertia may be modified by means of the elliptical mirror including the suspension mount with the first spring **308A,** the second spring **308B,** and the third spring **308C** that may be identically configured.

The first piezoelectric actuator **310A,** the second piezoelectric actuator **310B,** and the third piezoelectric actuator **310C** may be arranged correspondingly on the first spring **308A,** the second spring **308B,** and the third spring **308C** arranged in the interlaced nested spiral spring structure to obtain a compact configuration.

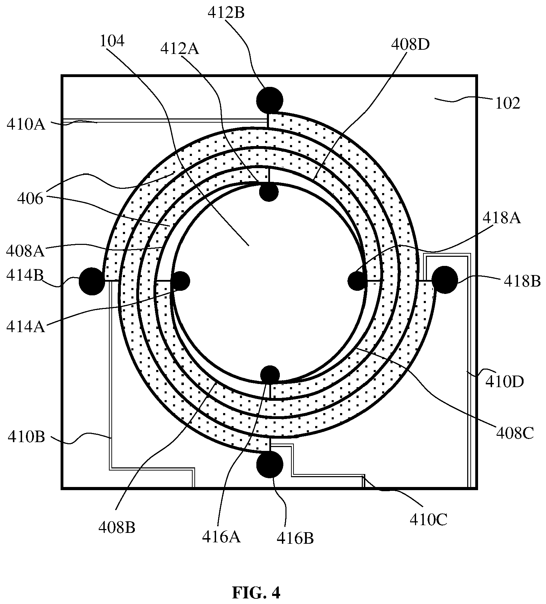

FIG. 4 is a schematic diagram of the mirror **104** of the deflection device **100** of FIG. 1 that includes four springs attached to the mirror **104** covering a circular segment of more than 90 degrees each in accordance with an implementation of the present disclosure. The mirror **104** includes a suspension mount **406** that includes a first spring **408A,** a second spring **408B,** a third spring **408C,** and a fourth spring **408D.** The first spring **408A** includes a first end **412A** and a second end **412B.** The first spring **408A** is attached to the mirror **104** with the first end **412A** and to the frame **102** with the second end **412B.** The second spring **408B** includes a first end **414A** and a second end **414B.** The second spring **408B** is attached to the mirror **104** with the first end **414A** and to the frame **102** with the second end **414B.** The third spring **408C** includes a first end **416A** and a second end **416B.** The third spring **408C** is attached to the mirror **104** with the first end **416A** and to the frame **102** with the second end **416B.** The fourth spring **408D** includes a first end **418A** and a second end **418B.** The fourth spring **408D** is attached to the mirror **104** with the first end **418A** and to the frame **102** with the second end **418B.** The first spring **408A,** the second spring **408B,** the third spring **408C,** and the fourth spring **408D** may be attached to the mirror **104** at an equal angular distance of 90 degrees and each covers the circular segment of more than 90 degrees.

The first spring **408A,** the second spring **408B,** the third spring **408C,** and the fourth spring **408D** may be interlaced in a form of a spiral around the mirror **104** resulting in an interlaced nested spiral spring structure around the mirror **104.** The first spring **408A,** the second spring **408B,** the third spring **408C** and the fourth spring **408D** may be interlaced in the form of an Archimedean spiral around the mirror **104** to provide a compact suspension mount for the mirror **104.**

When the mirror **104** is irradiated with a light beam, the mirror **104** is configured to swing back and forth about each of two or three axes with a respective eigenfrequency for reflecting incoming light at different angles to form a two-dimensional Lissajous pattern. The two-dimensional Lissajous pattern provides high-quality images with less power consumption and high scan speed compared to raster patterns. The eigenfrequency associated with the two or three axes is equal or substantially equal. The driving device **106** may be configured to excite the swing motion of the mirror **104** about each of the two or three axes at or near the respective eigenfrequency by applying periodic driving signals to a first piezoelectric actuator **410A,** a second piezoelectric actuator **410B,** a third piezoelectric actuator **410C,** and a fourth piezoelectric actuator **410D** attached to the first spring **408A,** the second spring **408B,** the third spring **408C,** and the fourth spring **408D** respectively. The periodic driving signals may include for each of the two or three axes a driving signal having a frequency equal or close to the eigenfrequency associated with a respective axis. The mirror **104** may be configured such that the moment of inertia of the mirror **104** is different in at least two axes for adjusting any difference between the frequencies of the driving signal associated with the respective axis.

The first piezoelectric actuator **410A,** the second piezoelectric actuator **410B,** the third piezoelectric actuator **410C,** and the fourth piezoelectric actuator **410D** may be arranged correspondingly on the first spring **408A,** the second spring **408B,** the third spring **408C** and the fourth spring **408D** arranged in the interlaced nested spiral spring structure to obtain a compact configuration.

The mirror **104** may be a MEMS (Micro-Electrical-Mechanical-System) mirror. The mirror **104** may be a micromirror including a diameter ranging from 0.5 millimeter (mm) to 10 mm. The mirror **104** may include a flat reflective surface and may be coated with a thin film of reflective material such as gold, aluminium or silver to obtain strong light reflection in the visible and Infra-Red wavelength. The mirror **104** may reflect an electromagnetic wave radiated from a light source while changing an angle of a reflection surface thereof. The movement of the mirror **104** is optionally a superposition of two or three independent swing motion (e.g. one per axis). This decomposition of the independent swing motion is probably possible only for relatively small amplitudes (e.g. not more than a few degrees of rotations for each axis). The mirror **104** may be excited by electromagnetic forces in a moving coil arrangement. The mirror **104** may be excited by the electromagnetic forces in a moving magnet arrangement.

The first transparent surface **112** and the second transparent surface **114** encapsulating the mirror **104** may be made up of a transparent material as the incoming light can either come from one side or from two sides of the surfaces of the mirror **104.**

In an example, when the mirror **104** with a high-quality is used, for example, having a quality factor of greater than 3,000, the amplitude response thereof has a strong resonance increase, and a corresponding phase response has a strong decrease. Therefore, the mirror **104** with the high-quality undergoes very substantial changes to its amplitude, even with small resonance frequency-shifts such that, small temperature changes, for example, are sufficient for bringing the mirror **104** out of resonance. In that case, the driving signal with a fixed frequency would no longer produce an acceleration effect, and would instead produce a deceleration effect. Hence, the driving device **106** may include a control loop for controlling the frequencies of the periodic driving signals. The periodic drive signals depend on the measured phase position of the mirror **104,** such that the phase and the maximum amplitudes of the swing motion are held within the resonance range of the mirror **104.** The phase and the amplitude of the swing motion may be held constant by the control loop. Optionally, two phase control loops that are independent of one another are provided. The frequencies of the periodic driving signals, therefore, are not fixed, but are continuously variable. They react to all shifts in resonance frequencies of the mirror **104** that occur. The frequencies (i.e. repetition rates) of the periodic driving signals changes actively in a close-loop control. Frequency values of the periodic signals are almost equal and have a frequency difference from about 30 hertz (Hz) to 120 Hz according to a refresh rate of a scanning display. The frequency difference is a small frequency value compared with typical driving frequencies which ranges from several kHz to 100kHz. The perpetual adaptation of the frequencies of the driving signals to the instantaneously occurring resonance frequencies of the mirror **104** results in a Lissajous trajectory that is traveling, whereby all areas on a projection screen are described with image data to achieve a good image overlap. A temperature-induced phase control may be possible with mirrors of lower quality, e.g. greater than 300.

In an example implementation, the predefined scanning resolution and the predefined scanning repetition rate for the allowable modification range for amplitude may be determined based on properties of the mirror **104** and the resolution of the viewing field. For example, the modification range is predefined as an inverse value of a minimum resolution in an axis. With a definition using pixels, the amplitude may change by less than one-pixel width. For example, in the case of a minimal resolution of 480x640 pixels, the amplitude of the mirror **104** may change by less than 1/480 (0.00283) and 1/640 (0.00146). The amplitude may change by at least one of less than 1%, less than 0.5%, or less than 0.3%. The driving signal having a frequency equal to the eigenfrequency associated with the respective axis may lead to a circular scanning or elliptical scanning. To cover the full projection area an amplitude modulation may be needed that continuously changes a diameter of a circle or a diameter of an ellipse.

In an example implementation, each interlaced nested spiral spring is described in polar coordinates by

$$r(\theta) = a + b.\theta$$

with r is a radius, a is an initial radius, b = a measure of growth of the radius, $\theta$ = an angle $0.n.2.\overline{\omega}$, n = a number of turns of the interlaced nested spiral spring.

In cartesian coordinates, the interlaced nested spiral spring may be designed and described by:

$$x_{component} = r \cdot \cos(\theta) = (a + b \cdot \theta) \cdot \cos(\theta)$$

$$y_{component} = r \cdot \sin(\theta) = (a + b \cdot \theta) \cdot \sin(\theta)$$

The growth factor (b) may be described by a ratio of the difference of final radius $a_{final}$ and the initial radius $a_{initial}$ divided by the desired number of turns n:

$$b = (a_{final} - a_{initial})/(2 \cdot \pi \cdot n)$$

The two or more interlaced nested spiral springs including a first spiral spring interlaced with the neighboring second or third or fourth or n-th spiral spring provide a densely packaged spiral spring arrangement enabling efficient use of the available chip space by the suspensions to achieve optimized compactness.

Although the present disclosure and its advantages have been described in detail, it should be understood that various changes, substitutions and alterations can be made herein without departing from the scope of the disclosure as defined by the appended claims.

**Claims**

1. A deflection device (100) for Lissajous scanning, the deflection device (100) comprising a frame (102), a mirror (104), a suspension mount comprising springs (110), and a driving device (106), wherein:

   ○ the mirror (104) is movably arranged in a recess in the frame (102) by means of the suspension mount, each spring being connected at one end to the mirror (104) and at the other end to the frame (102), wherein each of the springs has a shape of a path segment along a circumference of the mirror (104) in such a way that the path segments of the springs (110) together cover more than 360 degrees,
   ○ the springs (110) enable the mirror (104) to swing back and forth about each of two or three axes with a respective eigenfrequency, the eigenfrequencies associated with the two or three axes being equal or substantially equal,
   ○ the driving device (106) is configured to excite swing motion of the mirror (104) about each of the two or three axes at or near the respective eigenfrequency,

◦ the driving device (106) comprises one or more piezoelectric actuators, each of the springs (110) being attached to one of the one or more piezoelectric actuators,

◦ the driving device (106) is configured to excite the swing motion by applying periodic driving signals to the one or more piezoelectric actuators, the periodic driving signals including for each of the two or three axes a driving signal having a frequency equal or close to the eigenfrequency associated with the respective axis,

◦ the driving device (106) is configured to limit an amplitude of the swing motion, and

◦ the driving device (106) comprises a control loop configured to control the frequencies of the periodic driving signals based upon a measured phase position of the mirror (104), wherein a level of the frequencies is determined by a predefined scanning resolution and a predefined scanning repetition rate, and wherein the periodic driving signals have equal or different scanning repetition rates.

2. The deflection device according to claim 1, wherein the suspension mount comprises two or more interlaced nested spiral springs, wherein the two or more interlaced nested spiral springs are a subset of the springs.

3. The deflection device according to claim 2, wherein the two or more interlaced nested spiral springs are attached to the mirror at equal angular distance; and wherein:

◦ the suspension mount comprises three interlaced nested spiral springs, attached to the mirror 120 degrees apart and each covering a circular segment of more than 120 degrees; or

o the suspension mount comprises four interlaced nested spiral springs, attached to the mirror 90 degrees apart and each covering a circular segment of more than 90 degrees.

4. The deflection device according to any one of the claims 2 and 3, wherein the two or more interlaced nested spiral springs are interlaced in the form of an Archimedean spiral around the mirror.

5. The deflection device according to any one of the claims 2 - 4, wherein a spring stiffness of at least one of the two or more interlaced nested spiral springs is different from a spring stiffness of the remaining interlaced nested spiral springs.

6. The deflection device according to any one of the claims 2 - 5, wherein at least one of a width, length, thickness and/or material property of the at least one of the two or more interlaced nested spiral springs is different from that of the remaining interlaced nested spiral springs.

7. The deflection device according to any one of the claims 2 - 6, wherein the two or more interlaced nested spiral springs are arranged in rotational or mirror symmetry in relation to the mirror.

8. The deflection device according to any one of the preceding claims, wherein at least one of the two or more interlaced nested spiral spring is a torsion spring.

9. The deflection device according to any one of the preceding claims, wherein the mirror is configured such that the moment of inertia of the mirror is different in the at least two axes for adjusting any difference between the frequencies of the driving signal associated with the respective axis; and wherein a geometry of the mirror is different with respect to the at least two axes.

10. The deflection device according to any of the preceding claims, wherein the mirror is elliptical.

11. The deflection device of claim 2, wherein the driving device further comprises a drive electrode attached to each of the springs and/or to the mirror; and wherein the driving device comprises one or more piezoelectric actuators connected to the two or more interlaced nested spiral springs.

12. The deflection device of claim 1, wherein the mirror is vacuum packaged.

**Patentansprüche**

1. Ablenkvorrichtung (100) für Lissajous-Scanning, wobei die Ablenkvorrichtung (100) einen Rahmen (102), einen Spiegel (104), eine Aufhängung, die Federn (110) umfasst, und eine Antriebsvorrichtung (106) umfasst, wobei:

o der Spiegel (104) mittels der Aufhängung beweglich in einer Aussparung in dem Rahmen (102) angeordnet ist, wobei jede Feder an einem Ende mit dem Spiegel (104) und an dem anderen Ende mit dem Rahmen (102) verbunden ist, wobei jede der Federn eine Form eines Pfadsegments entlang eines Umfangs des Spiegels (104) in solcher Weise aufweist, dass die Pfadsegmente der Federn (110) zusammen mehr als 360 Grad abdecken,

o die Federn (110) es dem Spiegel (104) ermöglichen, um jede der zwei oder drei Achsen mit einer jeweiligen Eigenfrequenz hin und her zu schwingen, wobei die den zwei oder drei Achsen zugeordneten Eigenfrequenzen gleich oder im Wesentlichen gleich sind,

o die Antriebsvorrichtung (106) dazu konfiguriert ist, eine Schwingbewegung des Spiegels (104) um jede der zwei oder drei Achsen bei oder nahe der jeweiligen Eigenfrequenz anzuregen,

∘ die Antriebsvorrichtung (106) einen oder mehrere piezoelektrische Aktuatoren umfasst, wobei jede der Federn (110) an einem der einen oder mehreren piezoelektrischen Aktuatoren befestigt ist,

o die Antriebsvorrichtung (106) dazu konfiguriert ist, die Schwingbewegung durch Anwenden periodischer Antriebssignale an den einen oder die mehreren piezoelektrischen Aktuatoren anzuregen, wobei die periodischen Antriebssignale für jede der zwei oder drei Achsen ein Antriebssignal beinhalten, das eine Frequenz aufweist, die gleich oder nahe der Eigenfrequenz ist, die der jeweiligen Achse zugeordnet ist,

o die Antriebsvorrichtung (106) dazu konfiguriert ist, eine Amplitude der Schwingbewegung zu begrenzen, und

o die Antriebsvorrichtung (106) eine Steuerschleife umfasst, die dazu konfiguriert ist, die Frequenzen der periodischen Ansteuersignale basierend auf einer gemessenen Phasenposition des Spiegels (104) zu steuern, wobei ein Pegel der Frequenzen durch eine vordefinierte Scanning-Auflösung und eine vordefinierte Scanning-Wiederholungsrate bestimmt wird und wobei die periodischen Antriebssignale gleiche oder unterschiedliche Scanning-Wiederholungsraten aufweisen.

2. Ablenkvorrichtung gemäß Anspruch 1, wobei die Aufhängung zwei oder mehr ineinander verschachtelten Spiralfedern umfasst, wobei die zwei oder mehr ineinander verschachtelten Spiralfedern eine Teilmenge der Federn sind.

3. Ablenkvorrichtung gemäß Anspruch 2, wobei die zwei oder mehr ineinander verschachtelten Spiralfedern in gleichem Winkelabstand an dem Spiegel befestigt sind; und wobei:

o die Aufhängung drei ineinander verschachtelten Spiralfedern umfasst, die in einem Winkel von 120 Grad voneinander beabstandet an dem Spiegel befestigt sind und jeweils ein kreisförmiges Segment von mehr als 120 Grad abdecken; oder

o die Aufhängung vier ineinander verschachtelten Spiralfedern umfasst, die in einem Winkel von 90 Grad voneinander beabstandet an dem Spiegel befestigt sind und jeweils ein kreisförmiges Segment von mehr als 90 Grad abdecken.

4. Ablenkvorrichtung gemäß einem der Ansprüche 2 und 3, wobei die zwei oder mehr ineinander verschachtelten Spiralfedern in der Form einer archimedischen Spirale um den Spiegel verschachtelt sind.

5. Ablenkvorrichtung gemäß einem der Ansprüche 2 bis 4, wobei sich eine Federsteifigkeit mindestens einer der zwei oder mehr ineinander verschachtelten Spiralfedern von einer Federsteifigkeit der übrigen ineinander verschachtelten Spiralfedern unterscheidet.

6. Ablenkvorrichtung gemäß einem der Ansprüche 2 - 5, wobei sich mindestens eine von einer Breite, Länge, Dicke und/oder Materialeigenschaft der mindestens einen der zwei oder mehr ineinander verschachtelten Spiralfedern von der der übrigen ineinander verschachtelten Spiralfedern unterscheidet.

7. Ablenkvorrichtung gemäß einem der Ansprüche 2 - 6, wobei die zwei oder mehr ineinander verschachtelten Spiralfedern in Dreh- oder Spiegelsymmetrie in Bezug auf den Spiegel angeordnet sind.

8. Ablenkvorrichtung gemäß einem der vorhergehenden Ansprüche, wobei mindestens eine der zwei oder mehr ineinander verschachtelten Spiralfedern eine Torsionsfeder ist.

9. Ablenkvorrichtung gemäß einem der vorhergehenden Ansprüche, wobei der Spiegel so konfiguriert ist, dass das Trägheitsmoment des Spiegels in den mindestens zwei Achsen unterschiedlich ist, um einen Unterschied zwischen den Frequenzen des der jeweiligen Achse zugeordneten Ansteuersignals anzupassen;
und wobei eine Geometrie des Spiegels in Bezug auf die mindestens zwei Achsen unterschiedlich ist.

10. Ablenkvorrichtung gemäß einem der vorhergehenden Ansprüche, wobei der Spiegel elliptisch ist.

11. Ablenkvorrichtung gemäß Anspruch 2, wobei die Antriebsvorrichtung ferner eine Antriebselektrode umfasst, die an jeder der Federn und/oder an dem Spiegel befestigt ist;
und wobei die Antriebsvorrichtung einen oder mehrere piezoelektrische Aktuatoren umfasst, die mit den zwei oder mehreren ineinander verschachtelten spiralförmigen Federn verbunden sind.

**12.** Ablenkvorrichtung gemäß Anspruch 1, wobei der Spiegel vakuumverpackt ist.

## Revendications

**1.** Dispositif de déviation (100) pour balayage de Lissajous, le dispositif de déviation (100) comprenant un cadre (102), un miroir (104), un support de suspension comprenant des ressorts (110) et un dispositif d'entraînement (106), dans lequel :

> o le miroir (104) est disposé de manière mobile dans un évidement du cadre (102) au moyen du support de suspension, chaque ressort étant relié à une extrémité au miroir (104) et à l'autre extrémité au cadre (102), dans lequel chacun des ressorts a une forme de segment de trajet le long d'une circonférence du miroir (104) de telle sorte que les segments de trajet des ressorts (110) couvrent ensemble plus de 360 degrés,
> o les ressorts (110) permettent au miroir (104) de basculer d'avant en arrière autour de chacun des deux ou trois axes avec une fréquence propre respective, les fréquences propres associées aux deux ou trois axes étant égales ou sensiblement égales,
> o le dispositif d'entraînement (106) est configuré pour exciter le mouvement de balancement du miroir (104) autour de chacun des deux ou trois axes à ou près de la fréquence propre respective, o le dispositif d'entraînement (106) comprend un ou plusieurs actionneurs piézoélectriques, chacun des ressorts (110) étant fixé à l'un des un ou plusieurs actionneurs piézoélectriques,
> o le dispositif d'entraînement (106) est configuré pour exciter le mouvement de balancement en appliquant des signaux d'entraînement périodiques aux un ou plusieurs actionneurs piézoélectriques, les signaux d'entraînement périodiques comportant pour chacun des deux ou trois axes un signal d'entraînement ayant une fréquence égale ou proche de la fréquence propre associée à l'axe respectif,
> o le dispositif d'entraînement (106) est configuré pour limiter une amplitude du mouvement de balancement, et
> o le dispositif d'entraînement (106) comprend une boucle de commande configurée pour commander les fréquences des signaux d'entraînement périodiques en fonction d'une position de phase mesurée du miroir (104), dans lequel un niveau des fréquences est déterminé par une résolution de balayage prédéfinie et un taux de répétition de balayage prédéfinie, et dans lequel les signaux d'entraînement périodiques ont des taux de répétition de balayage égaux ou différents.

**2.** Dispositif de déviation selon la revendication 1, dans lequel le support de suspension comprend deux ou plusieurs ressorts spiraux imbriqués entrelacés, dans lequel les deux ou plusieurs ressorts spiraux imbriqués entrelacés est un sous-ensemble des ressorts.

**3.** Dispositif de déviation selon la revendication 2, dans lequel les deux ou plusieurs ressorts spiraux imbriqués entrelacés sont fixés au miroir à égale distance angulaire ; et dans lequel :

> o le support de suspension comprend trois ressorts spiraux imbriqués entrelacés, fixés au miroir à 120 degrés l'un de l'autre et couvrant chacun un segment circulaire de plus de 120 degrés ;
> ou
> o le support de suspension comprend quatre ressorts spiraux imbriqués entrelacés, fixés au miroir à 90 degrés l'un de l'autre et couvrant chacun un segment circulaire de plus de 90 degrés.

**4.** Dispositif de déviation selon l'une quelconque des revendications 2 et 3, dans lequel les deux ou plusieurs ressorts spiraux imbriqués entrelacés sont entrelacés sous la forme d'une spirale d'Archimède autour du miroir.

**5.** Dispositif de déviation selon l'une quelconque des revendications 2 à 4, dans lequel une rigidité de ressort d'au moins l'un des deux ou plusieurs ressorts spiraux imbriqués entrelacés est différente d'une rigidité de ressort des ressorts spiraux imbriqués entrelacés restants.

**6.** Dispositif de déviation selon l'une quelconque des revendications 2 à 5, dans lequel au moins l'un d'une largeur, d'une longueur, d'une épaisseur et/ou d'une propriété de matériau de l'au moins un des deux ou plusieurs ressorts spiraux imbriqués entrelacés est différente de celle des ressorts spiraux imbriqués entrelacés restants.

**7.** Dispositif de déviation selon l'une quelconque des revendications 2 à 6, dans lequel les deux ou plusieurs ressorts spiraux imbriqués entrelacés sont disposés en symétrie de rotation ou de miroir par rapport au miroir.

**8.** Dispositif de déviation selon l'une quelconque des revendications précédentes, dans lequel au moins l'un des deux ou plusieurs ressorts spiraux imbriqués entrelacés est un ressort de torsion.

9. Dispositif de déviation selon l'une quelconque des revendications précédentes, dans lequel le miroir est configuré de telle sorte que le moment d'inertie du miroir soit différent dans les au moins deux axes pour ajuster toute différence entre les fréquences du signal d'entraînement associé à l'axe respectif ; et dans lequel une géométrie du miroir est différente par rapport aux au moins deux axes.

10. Dispositif de déviation selon l'une quelconque des revendications précédentes, dans lequel le miroir est elliptique.

11. Dispositif de déviation selon la revendication 2, dans lequel le dispositif d'entraînement comprend également une électrode d'entraînement fixée à chacun des ressorts et/ou au miroir ; et dans lequel le dispositif d'entraînement comprend un ou plusieurs actionneurs piézoélectriques connectés aux deux ou plusieurs ressorts spiraux imbriqués entrelacés.

12. Dispositif de déviation selon la revendication 1, dans lequel le miroir est emballé sous vide.

106

108

112

104

110

102

114

100

**FIG.1**

**FIG. 2**

**FIG. 3**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9308539 A1
- JP 2002221673 A
- US 2012320379 A1
- EP 3640704 A1